(19) Europäisches Patentamt
European Patent Office
Office européen des brevets

(11) **EP 2 237 006 B1**

(12) **EUROPÄISCHE PATENTSCHRIFT**

(45) Veröffentlichungstag und Bekanntmachung des Hinweises auf die Patenterteilung:
**22.03.2017 Patentblatt 2017/12**

(51) Int Cl.:
*G01K 7/42* *(2006.01)*      *G01N 25/66* *(2006.01)*
*G01W 1/17* *(2006.01)*      *G01K 17/20* *(2006.01)*

(21) Anmeldenummer: **10003497.4**

(22) Anmeldetag: **30.03.2010**

(54) **Verfahren zur Erfassung und Auswertung von Raumklimadaten**

Method for recording and evaluating room atmosphere data

Procédé destiné à la détection et l'évaluation de données de climat ambiant

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.04.2009 DE 102009015896**

(43) Veröffentlichungstag der Anmeldung:
**06.10.2010 Patentblatt 2010/40**

(73) Patentinhaber: **METRONA WÄRMEMESSER UNION GMBH**
**81379 München (DE)**

(72) Erfinder:
• **Lieberum, Axel**
**81247 München (DE)**

• **Papert, Olaf**
**94469 Deggendorf (DE)**
• **Schröder, Franz**
**82054 Sauerlach (DE)**
• **Heckmann, Dieter**
**81475 München (DE)**

(74) Vertreter: **Prinz & Partner mbB**
**Patent- und Rechtsanwälte**
**Rundfunkplatz 2**
**80335 München (DE)**

(56) Entgegenhaltungen:
**EP-A1- 0 313 169      DE-A1- 10 309 550**
**DE-A1-102006 044 391**

## Beschreibung

Die Erfindung betrifft ein Verfahren zur Erfassung und Auswertung von Raumklimadaten.

Moderne und modernisierte Bausubstanz leidet häufig unter zu geringen Luftwechseln. Das Raumklima kann sich wegen moderner Dämmung schnell zu feucht gestalten. $CO_2$-Anreicherung durch Atemluft führt dann wegen verminderter Behaglichkeit häufig zu Dauerkippstellung der Fenster und permanenter Ablüftung. Klassische und unsanierte Bausubstanz leidet hingegen häufig an stärkeren Temperaturkontrasten zwischen der Innenraumluft und den inneren Raumbegrenzungsflächen (Innenoberflächen der Raumwände, insbesondere der Außenwände). In beiden Fällen ergibt sich ein Potential für stark erhöhte Feuchte und ggf. Kondenswasserbildung an so genannten Kaltpunkten (cold spots) innerhalb der Wohnumgebung. Bei längerfristiger Temperierung der Kaltpunkte nahe oder bis unterhalb des Taupunktes ergibt sich die Gefahr der Schimmelpilzbildung.

Um über einen längeren Zeitraum Aussagen über die Gefahr von Schimmelpilzbildung treffen zu können, ist es notwendig, Kenntnis über diejenigen Zeiträume zu erlangen, in denen der Taupunkt an einem Kaltpunkt der Wohnumgebung unterschritten ist. Nach bisherigem Erkenntnisstand benötigt man hierfür mindestens zwei in der Wohnumgebung angeordnete Messgeräte. Mit einem Raumfeuchtefühler werden die relative Raumfeuchte und die Temperatur gemessen. Mit diesem Wertepaar lassen sich unmittelbar die im Raum homogen verteilte absolute Raumfeuchtigkeit und damit auch der Taupunkt bestimmen. Da der Raumfeuchtefühler lediglich den Taupunkt bestimmt, aber nicht feststellen kann, welche Temperatur an der Innenseite der Außenwand herrscht, benötigt man einen weiteren Sensor, der direkt die Temperatur an der Wand misst und deren zeitlichen Verlauf aufzeichnet.

Nachteilig bei dieser Methode ist, dass ein separates Gerät mit einem Temperatursensor zur Messung der Wandtemperatur installiert werden muss, und dass eine manuelle, leitungsgebundene oder funktechnische Auslesung der von diesem Gerät aufgezeichneten Daten für die Auswertung erforderlich ist. Soll eine Auswertung nicht nur für einzelne, sondern für eine sehr große Anzahl von Gebäuden erfolgen, entstehen insgesamt sehr hohe Kosten für die Geräte und deren Installation sowie für die Auslesung der Geräte.

Ein Verfahren zur Erfassung und Auswertung von Raumklimadaten mit den Merkmalen des Oberbegriffs des Anspruchs 1 ist aus der DE 10 2006 044 391 A1 bekannt. Das Verfahren bezieht eine spezifische Temperaturabsenkung an einer kritischen Stelle ein, indem eine an der kritischen Stelle gemessene Wandinnentemperatur mit einem Taupunkt verglichen wird.

Aus der EP 0 313 169 A1 ist es im Rahmen der Regulierung der Luftqualität in einem Raum bekannt, die Wandinnentemperatur an einer Kältebrücke aus der Raumtemperatur, der Außentemperatur und den Wärmeübertragungseigenschaften der Kältebrücke zu bestimmen.

Aufgabe der Erfindung ist es, auf kostengünstige Weise eine aussagekräftige Bewertung eines Raumklimas in einer Wohnumgebung zu ermöglichen, insbesondere im Hinblick auf mögliche Schimmelpilzbildung.

Gelöst wird diese Aufgabe durch ein Verfahren mit den Merkmalen des Anspruchs 1. Vorteilhafte und zweckmäßige Ausgestaltungen des erfindungsgemäßen Verfahrens ergeben sich aus den Unteransprüchen.

Das erfindungsgemäße Verfahren zur Erfassung und Auswertung von Raumklimadaten umfasst folgende Schritte:

- Bestimmung eines zeitunabhängigen partiellen U-Werts für eine kritische Stelle an einer Wandinnenfläche,

- Bestimmung eines Taupunkts,

- Bestimmung einer Wandinnentemperatur an der kritischen Stelle, und

- Vergleich der Wandinnentemperatur an der kritischen Stelle mit dem Taupunkt.

Gemäß der Erfindung wird die Wandinnentemperatur aus einer Raumtemperatur und einer Außentemperatur mit Hilfe des partiellen U-Werts bestimmt. Der zeitliche Verlauf der Wandinnentemperatur an der kritischen Stelle und der zeitliche Verlauf des Taupunkts werden durch wiederholte Bestimmung der Wandinnentemperatur an der kritischen Stelle bzw. des Taupunkts in regelmäßigen oder unregelmäßigen zeitlichen Abständen ermittelt und verglichen. Zur wiederholten Bestimmung der Wandinnentemperatur an der kritischen Stelle mit Hilfe des partiellen U-Werts werden die für die Berechnung erforderlichen Außentemperaturen mit Hilfe eines Klimamodells bestimmt, das unter Verwendung einer Vielzahl von Wetterstationen und unter Einbeziehung wenigstens der orografischen Höhenlagen und/oder der Besiedlungsdichten geografisch zugeordnete Klimadaten bereitstellt.

Die Erfindung beruht auf der Erkenntnis, dass die Gefahr von Schimmelpilzbildung besser beurteilt werden kann, wenn bezüglich der auszuwertenden Daten nicht auf große Flächen oder gar den ganzen Raum, sondern gezielt auf kritische Stellen abgestellt und deren Temperatur einbezogen wird. Die Wandinnentemperatur an den kritischen Stellen muss nicht an diesen Stellen direkt gemessen werden, sondern wird bei Kenntnis der partiellen U-Werte für die kritischen Stellen rechnerisch bestimmt. Dies hat den Vorteil, dass für die Erfassung dieser Temperaturen keine weiteren Sensoren (Temperaturfühler) notwendig sind, die zudem über einen Speicher verfügen und ausgelesen werden müssten.

Eine aussagekräftige objektive Beurteilung des Raumklimas über einen längeren Zeitraum ergibt sich gemäß der Erfindung dadurch, dass der zeitliche Verlauf der Wandinnentemperatur an der kritischen Stelle und der zeitliche Verlauf des Taupunkts durch wiederholte Bestimmung der Wandinnentemperatur an der kritischen Stelle bzw. des Taupunkts in regelmäßigen oder unregelmäßigen zeitlichen Abständen ermittelt und miteinander verglichen werden.

Des Weiteren sieht die Erfindung vor, dass zur wiederholten Bestimmung der Wandinnentemperatur an der kritischen Stelle mit Hilfe des partiellen U-Werts die für die Berechnung erforderlichen Außentemperaturen mit Hilfe eines Klimamodells bestimmt werden, das unter Verwendung einer Vielzahl von Wetterstationen und unter Einbeziehung wenigstens der orografischen Höhenlagen und/oder der Besiedlungsdichten geografisch zugeordnete Klimadaten bereitstellt. Die Nutzbarmachung eines solchen Modells erlaubt einen überregionalen Einsatz des erfindungsgemäßen Verfahrens, ohne dass eine Vielzahl von wiederholt auszulesenden Außenthermometern benötigt wird.

Vorzugsweise ist die kritische Stelle, an der nach dem erfindungsgemäßen Verfahren die Wandinnentemperatur bestimmt wird, ein Kaltpunkt. Kondensat und damit einhergehend Schimmelpilz bilden sich nämlich üblicherweise nicht an der gesamten Wandinnenfläche oder an willkürlichen Stellen, sondern zuerst nur an den Kaltpunkten.

Eine vorteilhafte Ausführungsform des erfindungsgemäßen Verfahrens sieht vor, dass der partielle U-Wert einfach und zerstörungsfrei aus einer Raumtemperatur, einer Außentemperatur und einer Temperatur an der kritischen Stelle ermittelt wird, wobei sich die Temperaturen auf den gleichen Zeitpunkt beziehen.

Zur Lokalisierung eines Kaltpunkts und zur Bestimmung des zugehörigen partiellen U-Werts wird vorzugsweise eine Wandinnenfläche mit einem Scan-Thermometer abgetastet, um ein wenigstens lokales Temperaturminimum zu bestimmen, das als Wandinnentemperatur an der kritischen Stelle zugrunde gelegt wird.

Weitere Merkmale und Vorteile der Erfindung ergeben sich aus der nachfolgenden Beschreibung und aus den beigefügten Zeichnungen, auf die Bezug genommen wird. In den Zeichnungen zeigen:

Figur 1    einen klimatisch zu bewertenden Raum mit einer Außenwand; und

Figur 2    ein Ablaufschema des erfindungsgemäßen Verfahrens; und

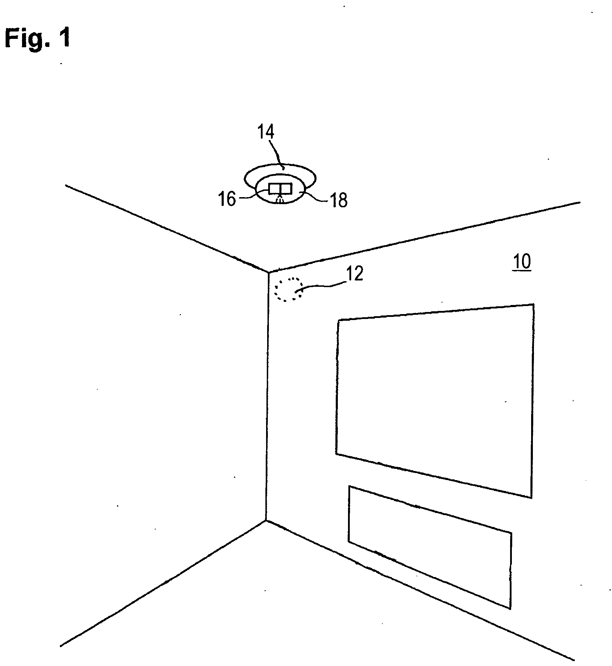

In Figur 1 ist schematisch ein Raum mit einer Außenwand 10 dargestellt. Mit 12 ist ein Kaltpunkt an der Innenfläche der Außenwand bezeichnet. Unter einem Kaltpunkt im Sinne der Erfindung ist eine kritische oder neuralgische Stelle an der Innenfläche einer Wand in einem beheizten Raum zu verstehen, die eine Temperatur deutlich unter der mittleren Raumtemperatur aufweist. In der Regel treten die niedrigsten Temperaturen an Raumecken, an Außenwänden mit unzureichender Wärmeisolierung und ggf. zusätzlich eingedrungenem Wasser oder an Fensterleibungen auf. Kaltpunkte repräsentieren im Allgemeinen die Wärmesenken einer beheizten Wohnumgebung.

Mit 14 ist ein Neutralpunkt des Raums bezeichnet. Unter einem Neutralpunkt im Sinne der Erfindung ist eine Stelle im Raum zu verstehen, an der weder Wärmequellen oder -senken noch Feuchtequellen oder -senken zu erwarten sind und an der vorzugsweise vorwiegend mittlere und wenig variable Feuchte- und Temperaturwerte auftreten. Ein typischer Neutralpunkt eines Wohnraumes ist die Deckennähe in der Raummitte, gewöhnlich der bevorzugte Montagepunkt für Brand- oder Rauchwarnmelder.

Am Neutralpunkt ist eine Sensoreinrichtung 16 angeordnet, vorzugsweise im Gehäuse 18 eines solchen Brand- oder Rauchwarnmelders. Die Sensorvorrichtung 16 weist einen Feuchtesensor und einen Temperatursensor sowie einen Speicher zur Aufzeichnung des zeitlichen Verlaufs der gemessenen Feuchte- und Temperaturwerte auf. Aus den Feuchte- und Temperaturwertepaaren lässt sich jeweils ein Taupunkt für den Raum rechnerisch bestimmen. Der Taupunkt ist allgemein diejenige Temperatur, auf die man nicht vollständig mit Wasserdampf gesättigte Luft abkühlen müsste, so dass sie vollständig gesättigt ist und Kondensatbildung einsetzt (entspricht einer relativen Feuchte von 100 %).

Im Folgenden wird ein Beispiel für die Durchführung des erfindungsgemäßen Verfahrens zur Erfassung und Auswertung von Raumklimadaten beschrieben.

In dem zu bewertenden Raum wird an den Wandinnenflächen nach einem oder mehreren Kaltpunkten 12 gesucht, vorzugsweise nach dem kältesten Punkt. Die Temperatur eines ermittelten Kaltpunkts 12 sowie die Raumtemperatur, gemessen vorzugsweise an einem Neutralpunkt 14, werden aufgezeichnet, ebenso wie die Außentemperatur, die gemessen oder auf sonstige Weise erhalten werden kann (wie später noch erläutert wird). Diese drei Temperaturen sollten sich auf den gleichen Zeitpunkt beziehen. Da in der Praxis eine Messung von Temperaturen an verschiedenen Stellen zum selben Zeitpunkt nicht sinnvoll durchführbar ist, ist der Ausdruck "gleicher Zeitpunkt" entsprechend auszulegen. Die Messzeitpunkte sollten aber so eng zusammen liegen, dass dazwischen keine signifikanten Änderungen des Innen- oder Außenklimas stattgefunden haben. Die drei Temperaturen werden dem zu bewertenden Raum zugeordnet.

Konkret kann die Bestimmung der drei Temperaturen bei einer Vor-Ort-Begehung, z. B. bei der Erstmontage eines in einen Brand- oder Rauchwarnmelder integrierten Raumfeuchtemessgeräts mit einer Sensoreinrichtung 16 oder auch bei einer turnusmäßigen manuellen Ablesung von Heizkostenverteilern erfolgen. Mit Hilfe eines geeigneten Messgeräts, das z. B. ein Infrarotthermometer und einen Datenspeicher aufweist, werden die Wandinnenflächen abgetastet, insbesondere die Innenflächen der Außenwände 10. Bei einer solchen Abtastung kann aus den Messwerten eine mittlere Wandtemperatur ermittelt werden. Starke lokale Abweichungen nach unten deuten auf Kaltpunkte 12 hin. Die im Messgerät gespeicherten Werte enthalten minimale, maximale und Durchschnittstemperaturwerte, insbesondere aber eine minimale Temperatur an einem Kaltpunkt 12. Gleichzeitig bzw. kurz davor oder danach wird in der Nähe des betrachteten Raums die Außentemperatur gemessen und datentechnisch gespeichert. Das Raumfeuchtemessgerät mit der Sensoreinrichtung 16 misst darüber hinaus die vorherrschende Raumtemperatur. Diese Daten werden per EDV dem installierten Raumfeuchtemessgerät für nachfolgende Datenauswertungen zugeordnet.

Aus der Außentemperatur, der Raumtemperatur und der Temperatur des Kaltpunkts, die sich alle auf den gleichen Zeitpunkt beziehen, lässt sich auf einfache Art und zerstörungsfrei einmalig ein zeitunabhängiger Wärmedurchgangskoeffizient (U-Wert) an der Stelle des Kaltpunkts 12 ermitteln.

Allgemein ist der U-Wert ein Maß für den Wärmestromdurchgang durch eine Wand, wenn auf der Innen- und Außenseite verschiedene Temperaturen anliegen. Der U-Wert ist eine spezifische Kennzahl der Materialzusammensetzung der Wand und lässt sich mit hinreichender Genauigkeit folgendermaßen darstellen:

$$U \ = \ 7{,}7 \ W/(K \cdot m^2) \cdot (Ti(t0) - Twi(t0)) \ / \ (Ti(t0) - Ta(t0))$$

mit

Ti:     Raumtemperatur,
Twi:    mittlere Temperatur an der Wandinnenfläche,
Ta:     Außentemperatur in der Nähe des Raums,
t0:     Zeitpunkt der Temperaturmessungen (genähert).

Für die Auswertung wird jedoch nicht der U-Wert der gesamten Wand 10 herangezogen, sondern der nachfolgend als partieller U-Wert bezeichnete U-Wert an der Stelle des für Schimmelpilzbildung besonders anfälligen Kaltpunkts 12. In obiger Formel ist also die mittlere Temperatur der Wandinnenfläche Twi durch die gemessene minimale Temperatur am Kaltpunkt Tkp zu ersetzen. Der partielle U-Wert unterschiedet sich vom U-Wert der zugehörigen Wand 10 aufgrund der Differenz zwischen mittlerer Wandinnentemperatur und Temperatur am Kaltpunkt 12, die typischerweise 5 bis 10 K betragen kann. Der einmalig bestimmte partielle U-Wert wird wiederum dem Raumfeuchtemessgerät in diesem Raum datentechnisch zugeordnet.

Das Raumfeuchtemessgerät misst und speichert über einen längeren Zeitraum (Wochen, Monate) in regelmäßigen oder unregelmäßigen Abständen die Raumtemperatur und die Feuchte, woraus sich der zeitliche Verlauf des Taupunkts bestimmen lässt. Ziel der klimatischen Beurteilung des Raums ist nun der Vergleich des zeitlichen Verlaufs des Taupunkts mit dem zeitlichen Verlauf der Temperatur am Kaltpunkt 12.

Die Temperatur am Kaltpunkt Tkp lässt sich wiederholt zu jedem Zeitpunkt t, zu dem auch die Raumtemperatur Ti und die Außentemperatur Ta bekannt sind, ohne separaten Temperaturfühler rein rechnerisch mit Hilfe des partiellen U-Werts bestimmen:

$$Tkp(t) \ = \ Ti(t) \ + \ U \cdot (Ta(t) - Ti(t)) \ / \ 7{,}7 \ W/(K \cdot m^2)$$

Problematisch ist jedoch die fortlaufende Bestimmung der Außentemperatur Ta(t) in der Nähe des Raums mit hinreichender Genauigkeit. Theoretisch könnte die Temperatur eines in der Nähe installierten Außenthermometers zum jeweiligen Zeitpunkt t der Raumtemperaturmessung ausgelesen werden.

Eine andere, deutschlandweit praktikable Möglichkeit ist die Nutzbarmachung eines meteorologischen Modells, wie es vom Deutschen Wetterdienst grundsätzlich verfügbar ist. Der Deutsche Wetterdienst stellt für jeden Tag auf der Basis von rund 400 Wetterstationen und unter Nutzung moderner meteorologischer Methoden für jeden einzelnen Postleitzahl-Zustellungsbezirk in einer Auflösung von 1 km$^2$ Klimadaten bereit. Diese Klimadaten sind das Resultat einer umfangreichen Modellrechnung, die als Witterungseinflussfaktoren mindestens die Tagesmitteltemperaturen, die orografische Höhenlage, die geografische Lage in einem 1 x 1 km-Gitternetz über Deutschland sowie einen Gewichtungsfaktor für die Besiedlungsdichte berücksichtigt. Weitere optionale Faktoren können solare Strahlungseinträge, Windgeschwindigkeiten u. ä. meteorologische Parameter sein.

Für die Raumklimabewertung können aus diesen Daten die erforderlichen Außentemperaturen in der Nähe des zu bewertenden Raums bestimmt werden, eventuell unter Einbeziehung einer Abschätzung des zeitlichen Verlaufs der Tagestemperatur. Die so bestimmten Außentemperaturen Ta(t) sind für die Bestimmung der Temperaturen am Kaltpunkt Tkp(t) des Raums hinreichend genau.

Somit kann der zeitliche Verlauf der Temperatur am Kaltpunkt 12 ermittelt, aufgezeichnet und mit dem zeitlichen Verlauf des Taupunkts verglichen werden. Diejenigen Zeiträume, in denen die Temperatur am Kaltpunkt 12 unterhalb des Taupunkts liegt, sind für Kondensat- und damit Schimmelpilzbildung als besonders kritisch anzusehen.

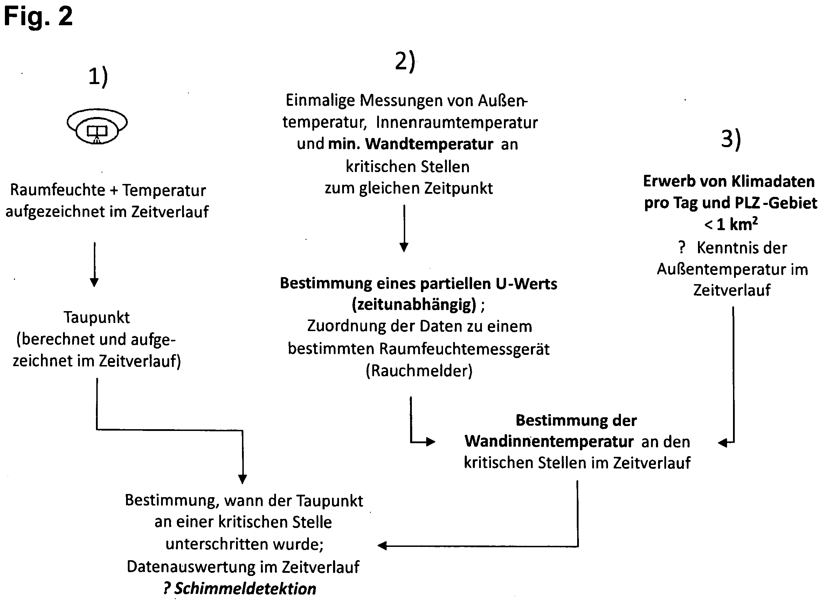

Figur 2 zeigt ein Ablaufschema des erfindungsgemäßen Verfahrens mit drei Zweigen, die mit 1), 2) und 3) gekennzeichnet sind. Der Zweig 1) beschreibt eine einfach geartete und seit längerem bereits angewandte Form der Raumklimadatenerfassung mit einem Raumfeuchtemessgerät, bei dem der zeitliche Verlauf der Raumfeuchte und -temperatur aufgezeichnet wird. Daraus wird der zeitliche Verlauf des Taupunkts berechnet. Die Auswertung dieser Daten im Hinblick auf die Gefahr der Schimmelpilzbildung im Raum ist alleine aber nicht besonders aussagekräftig, da weder eine Wandinnentemperatur noch eine Temperatur eines Kaltpunkts berücksichtigt wird.

Die Zweige 2) und 3) stellen dagegen Verfahrensschritte dar, die bislang bei der Raumklimadatenerfassung und -auswertung nicht praktiziert wurden. In Kombination ergeben die beiden Zweige 2) und 3) ein Modell, das es ermöglicht, den zeitlichen Verlauf der Temperatur an einer oder mehreren Stellen an einer Wandinnenfläche aufzuzeichnen, insbesondere an Kaltpunkten 12, ohne diese Temperaturen tatsächlich im Zeitverlauf zu messen.

Die Kombination der Zweige 1), 2) und 3) bildet schließlich beispielhaft das oben beschriebene erfindungsgemäße Verfahren zur Erfassung und Auswertung von Raumklimadaten ab. Das Verfahren ermöglicht es, den gemäß Zweig 1) im Zeitverlauf ermittelten Taupunkt mit dem zeitlichen Verlauf der Wandinnentemperatur an kritischen Stellen (Kaltpunkten) zu vergleichen.

Das Verfahren kann für mehrere Kaltpunkte oder auch andere Punkte desselben Raums durchgeführt werden. Bei Kenntnis der räumlichen Lage der Punkte kann dann rückgeschlossen werden, wann und wo in einem Raum die Gefahr für Schimmelpilzbildung besonders hoch ist.

## Patentansprüche

1. Verfahren zur Erfassung und Auswertung von Raumklimadaten, mit folgenden Schritten:

   - Bestimmung eines zeitunabhängigen partiellen U-Werts für eine kritische Stelle an einer Wandinnenfläche,
   - Bestimmung eines Taupunkts,
   - Bestimmung einer Wandinnentemperatur an der kritischen Stelle, und
   - Vergleich der Wandinnentemperatur an der kritischen Stelle mit dem Taupunkt,

   wobei der der zeitliche Verlauf der Wandinnentemperatur an der kritischen Stelle und der zeitliche Verlauf des Taupunkts durch wiederholte Bestimmung der Wandinnentemperatur an der kritischen Stelle bzw. des Taupunkts in regelmäßigen oder unregelmäßigen zeitlichen Abständen ermittelt und verglichen werden, **dadurch gekennzeichnet, dass** die Wandinnentemperatur aus einer Raumtemperatur und einer Außentemperatur mit Hilfe des partiellen U-Werts bestimmt wird, wobei zur wiederholten Bestimmung der Wandinnentemperatur an der kritischen Stelle mit Hilfe des partiellen U-Werts die für die Berechnung erforderlichen Außentemperaturen mit Hilfe eines Klimamodells bestimmt werden, das unter Verwendung einer Vielzahl von Wetterstationen und unter Einbeziehung wenigstens der orografischen Höhenlagen und/oder der Besiedlungsdichten geografisch zugeordnete Klimadaten bereitstellt.

2. Verfahren nach Anspruch 1, **dadurch gekennzeichnet, dass** die kritische Stelle ein Kaltpunkt ist.

3. Verfahren nach Anspruch 1 oder 2, **dadurch gekennzeichnet, dass** der Taupunkt durch Feuchte- und Temperaturmessung an einem Neutralpunkt bestimmt wird.

4. Verfahren nach einem der vorhergehenden Ansprüche, **dadurch gekennzeichnet, dass** der partielle U-Wert aus einer Raumtemperatur, einer Außentemperatur und einer Temperatur an der kritischen Stelle ermittelt wird, wobei sich die Temperaturen auf den gleichen Zeitpunkt beziehen.

5. Verfahren nach Anspruch 4, **dadurch gekennzeichnet, dass** zur Bestimmung des partiellen U-Werts eine Wandinnenfläche mit einem Scan-Thermometer abgetastet wird, um ein wenigstens lokales Temperaturminimum zu bestimmen, das als Wandinnentemperatur an der kritischen Stelle zugrunde gelegt wird.

6. Verfahren nach einem der vorhergehenden Ansprüche, **dadurch gekennzeichnet, dass** zur wiederholten Bestimmung der Wandinnentemperatur an der kritischen Stelle mit Hilfe des partiellen U-Werts die für die Berechnung erforderlichen Raumtemperaturen von einem Raumfeuchtemessgerät gemessen werden, das vorzugsweise in einen Brand- oder Rauchwarnmelder integriert ist.

7. Verfahren nach einem der vorhergehenden Ansprüche, **dadurch gekennzeichnet, dass** für mehrere kritische Stellen partielle U-Werte und damit Wandinnentemperaturen an der kritischen Stelle bestimmt werden, die mit dem Taupunkt verglichen werden.

**Claims**

1. A method of detecting and evaluating indoor climate data, comprising the following steps:

   - determining a time independent partial U value for a critical point on a wall inner surface,
   - determining a dew point,
   - determining a wall inner temperature at the critical point, and
   - comparing the wall inner temperature at the critical point with the dew point,

   the temporal profile of the wall inner temperature at the critical point and the temporal profile of the dew point being defined by the repetitive determination of the wall inner temperature at the critical point or of the dew point at regular or irregular time intervals and being compared with each other, **characterized in that** the wall inner temperature is determined from an ambient temperature and an outside temperature using the partial U value, wherein for the repetitive determination of the wall inner temperature at the critical point by means of the partial U value, the outside temperatures necessary for the calculation are determined by means of a climatic model which provides geographically associated climate data using a plurality of weather stations and taking at least the orographic altitudes and/or the population densities into account.

2. The method according to claim 1, **characterized in that** the critical point is a cold point.

3. The method according to claim 1 or 2, **characterized in that** the dew point is determined by a humidity and temperature measurement at a neutral point.

4. The method according to any of the preceding claims, **characterized in that** the partial U value is defined from an ambient temperature, an outside temperature and a temperature at the critical point, the temperatures referring to the same point in time.

5. The method according to claim 4, **characterized in that** for the determination of the partial U value, a wall inner surface is scanned using a scanning thermometer to determine at least a local temperature minimum which is taken as a basis as a wall inner temperature at the critical point.

6. The method according to any of the preceding claims, **characterized in that** for the repetitive determination of the wall inner temperature at the critical point by means of the partial U value, the ambient temperatures necessary for the calculation are measured by an ambient air humidity measuring device which is preferably integrated in a fire alarm system or a smoke alarm.

7. The method according to any of the preceding claims, **characterized in that** partial U values are determined for a plurality of critical points and thus wall inner temperatures at the critical points which are compared with the dew point.

**Revendications**

1. Procédé de détection et d'évaluation de données de climat ambiant, comprenant les étapes suivantes :

   - détermination d'une valeur U partielle indépendante du temps pour un endroit critique sur une surface intérieure de paroi,
   - détermination d'un point de rosée,
   - détermination d'une température intérieure de paroi à l'endroit critique, et
   - comparaison de la température intérieure de paroi à l'endroit critique avec le point de rosée,

le profil de la température intérieure de paroi dans le temps à l'endroit critique et le profil dans le temps du point de rosée étant définis par la détermination répétée de la température intérieure de paroi à l'endroit critique ou du point de rosée à intervalles de temps réguliers ou irréguliers, et étant comparés, **caractérisé en ce que** la température intérieure de paroi est déterminée à partir d'une température ambiante et d'une température extérieure au moyen de la valeur U partielle, dans lequel pour la détermination répétée de la température intérieure de paroi à l'endroit critique au moyen de la valeur U partielle, les températures extérieures nécessaires pour le calcul sont déterminées au moyen d'un modèle climatique lequel fournit des données climatiques géographiquement associées en utilisant une pluralité de stations météorologiques et en tenant compte au moins de l'altitude orographique et/ou des densités de population.

2. Procédé selon la revendication 1, **caractérisé en ce que** le point critique est un point froid.

3. Procédé selon la revendication 1 ou 2, **caractérisé en ce que** le point de rosée est déterminé par une mesure d'humidité et de température à un point neutre.

4. Procédé selon l'une des revendications précédentes, **caractérisé en ce que** la valeur U partielle est définie à partir d'une température ambiante, d'une température extérieure et d'une température au point critique, les températures se rapportant au même moment.

5. Procédé selon la revendication 4, **caractérisé en ce que** pour la détermination de la valeur U partielle, une surface intérieure de paroi est balayée au moyen d'un thermomètre scanneur afin de déterminer un minimum de température au moins local lequel est utilisé comme base en tant que température intérieure de paroi au point critique.

6. Procédé selon l'une des revendications précédentes, **caractérisé en ce que** pour la détermination répétée de la température intérieure de paroi au point critique au moyen de la valeur U partielle, les températures ambiantes nécessaires pour le calcul sont mesurées par un appareil de mesure d'humidité ambiante qui est de préférence intégré dans un détecteur d'incendie ou un détecteur de fumées.

7. Procédé selon l'une des revendications précédentes, **caractérisé en ce que** des valeurs U partielles sont déterminées pour plusieurs endroits critiques et ainsi des températures intérieures de paroi aux endroits critiques lesquels sont comparées avec le point de rosée.

EP 2 237 006 B1

**Fig. 1**

8

# Fig. 2

**1)**

Raumfeuchte + Temperatur
aufgezeichnet im Zeitverlauf

↓

Taupunkt
(berechnet und aufgezeichnet im Zeitverlauf)

**2)**

Einmalige Messungen von Außentemperatur, Innenraumtemperatur
und **min. Wandtemperatur** an
kritischen Stellen
zum gleichen Zeitpunkt

↓

**Bestimmung eines partiellen U-Werts
(zeitunabhängig)** ;
Zuordnung der Daten zu einem
bestimmten Raumfeuchtemessgerät
(Rauchmelder)

**3)**

**Erwerb von Klimadaten
pro Tag und PLZ-Gebiet
< 1 km²**
? Kenntnis der
Außentemperatur im
Zeitverlauf

**Bestimmung der
Wandinnentemperatur** an den
kritischen Stellen im Zeitverlauf

Bestimmung, wann der Taupunkt
an einer kritischen Stelle
unterschritten wurde;
Datenauswertung im Zeitverlauf
*? Schimmeldetektion*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006044391 A1
- EP 0313169 A1